# EUROPEAN PATENT APPLICATION

(11) **EP 2 827 228 A1**
(43) Date of publication of application: **21.01.2015**
(21) Application number: 13306036.8
(22) Date of filing: 19.07.2013
(51) Int. Cl.: G06F 3/041

(54) **Method for automatically allowing a touch screen device and an electronic device to start a bi-directional capacitive and light communication, and associated processing devices**

(71) Applicant: Gemalto SA, 92190 Meudon (FR)
(72) Inventor: Antoine, Matthieu, 92190 MEUDON (FR); Normend, Yoan, 92190 MEUDON (FR)
(74) Representative: Cour, Pierre

(57) **Abstract**

A method is intended for allowing a first electronic device (E1) with a touch screen (TS) to start a bi-directional capacitive and light communication with a second electronic device (E2) with a capacitive module (CM) and a photosensor (PS). This method comprises a step during which the second electronic device (E2) sends a chosen touch pattern continuously, the first electronic device (E1) displays a chosen light pattern continuously and detects the second electronic device (E2) upon reception of this chosen touch pattern, the second electronic device (E2) detects the first electronic device (E1) upon detection of the chosen light pattern, then sends a chosen steady touch, and the first electronic device (E1) displays at least one chosen steady image upon reception of this chosen steady touch.

## Description

### Technical field

The present invention relates to electronic devices, and more precisely to initiation of a bi-directional capacitive and light communication between a first electronic device with a touch screen and a second electronic device with a capacitive module and a photo-sensor.

### Background of the invention

As known by those skilled in the art, it has been proposed to establish bi-directional capacitive and light communications between first and second electronic devices in order they could exchange information data, such as One-Time-Passwords (OTP), for instance. The first electronic device displays information data for the second electronic device with its touch screen, and the second electronic device reads information displayed onto the touch screen with its photo-sensor.

In order such a data exchange could be performed reliably, the second electronic device must be in physical contact with the touch screen of the first electronic device and the user of the latter must trigger a dedicated event with the touch screen, which appears to be neither convenient nor instinctive. Moreover, before the physical contact takes place between the first and second electronic devices, both capacitive and light communication channels can be polluted by background noise (i.e. the ambient light for the photo-sensor, and the user touches for the capacitive touch screen).

### Summary of the invention

So, an objective of the invention is to improve the situation, and notably to check automatically that first and second electronic devices in physical contact are ready to exchange information data via a bi-directional capacitive and light communication, without any action from their user.

To this effect the invention provides notably a method, intended for allowing a first electronic device with a touch screen to start a bi-directional capacitive and light communication with a second electronic device with a capacitive module and a photo-sensor, and comprising a step during which:
- the second electronic device sends a chosen touch pattern continuously with its capacitive module,
- the first electronic device displays a chosen light pattern continuously with its touch screen and detects the second electronic device upon reception of the chosen touch pattern with its touch screen,
- the second electronic device detects the first electronic device upon detection of the chosen light pattern with its photo-sensor, then sends a chosen steady touch with its capacitive module, and
- the first electronic device displays at least one chosen steady image with its touch screen upon reception of the chosen steady touch with this touch screen.

The method according to the invention may include additional characteristics considered separately or combined, and notably:
- its step may comprise a first sub-step (i) during which the second electronic device first starts sending the chosen touch pattern continuously with its capacitive module, and a second sub-step (ii) during which the first electronic device detects the second electronic device upon reception of the chosen touch pattern with its touch screen, then starts displaying the chosen light pattern continuously with its touch screen;
- its step may comprise a third sub-step (iii) during which the second electronic device detects the first electronic device upon detection of the chosen light pattern with its photo-sensor, then stops sending the chosen touch pattern, and then sends the chosen steady touch with its capacitive module, and a fourth sub-step (iv) during which the first electronic device stops displaying the chosen light pattern upon reception of the chosen steady touch with its touch screen, and then displays the chosen steady image with the touch screen;
- the second electronic device may detect the first electronic device after having detected the chosen light pattern at least N times with its photo-sensor, with N greater or equal to two;
- the first electronic device may detect the second electronic device after having received the chosen touch pattern at least M times with its touch screen, with M greater or equal to two.

The invention also provides a touch screen device having a touch screen and a communication protocol module. The communication protocol module is arranged:
- for detecting communication device when the touch screen device receives at least one chosen touch pattern on the touch screen, then for triggering a continuous display of a chosen light pattern by the touch screen, and
- for triggering a display of a chosen steady image by the touch screen and authorizing the touch screen device to start a bi-directional capacitive and light communication with the communication device when the touch screen device receives a chosen steady touch from the communication device.

For instance, this communication protocol module may be arranged for detecting the communication device when the touch screen device receives the chosen touch pattern at least M times with its touch screen, with M greater or equal to two.

The invention also provides a communication device having a capacitive module, a photo-sensor and a communication protocol module. The communication protocol module is arranged for:
- triggering a continuous sending of a chosen touch pattern by the capacitive module of the communication device,
- for detecting electronic touch screen device when the photo-sensor detects a chosen light pattern displayed on a touch screen of the touch screen device, then for triggering sending of a chosen steady touch by the capacitive module for emulating touch on said touch screen, and
- for authorizing the communication device to start a bi-directional capacitive and light communication with the touch screen device when the photo-sensor of the communication device detects a chosen steady touch displayed on the touch screen.

For instance, this communication protocol module may be arranged for detecting the touch screen device when the photo-sensor of the communication device has detected the chosen light pattern at least N times, with N greater or equal to two.

### Brief description of the figures

Other features and advantages of the invention will become apparent on examining the detailed specifications hereafter and the appended drawings, wherein:
- figure 1 schematically illustrates an example of second electronic device comprising a second communication protocol module according to the invention and lying on the touch screen of a first electronic device comprising a first communication protocol module according to the invention, and
- figure 2 schematically illustrates an example of algorithm comprising sub-steps implementing an example of embodiment of a method according to the invention.

### Detailed description of the preferred embodiment

The appended drawings may serve not only to complete the invention, but also to contribute to its definition, if need be.

The invention aims, notably, at offering a method, and associated first D1 and second D2 communication protocol modules, intended for allowing a first electronic device E1 (with a touch screen TS) to start a bi-directional capacitive and light communication with a second electronic device E2 (with a capacitive module CM and a photo-sensor PS).

In the following description it will be considered that the first electronic device E1 is a mobile telephone (for instance a smart phone). But the invention is not limited to this type of first electronic device. It concerns a lot of electronic devices, and in particular all devices having at least a touch screen (with capacitive capabilities). So, a first electronic device E1 may be any kind of touch screen device, i.e. any kind of device having a touch screen like an electronic tablet, a personal computer, a laptop, a game console, a display screen of a system (vehicle, alarm system, power supply installation, household electrical appliance, audio and/or video player, television set, hi-fi system), vending machine or automatic teller machine (ATM) with a touch screen.

Moreover, in the following description it will be considered that the second electronic device E2 is any kind of communication device that have to communicate with a touch screen device. As an example the communication device can be an OTP token for sending an OT on demand through a touch screen, but the invention is not limited to this example. It concerns any kind of device having a communication interface having at least a capacitive module CM and a photo-sensor PS. So, a second electronic device E2 may be also a portable electronic token, a mobile phone or a complex smart card (including a battery and several other components).

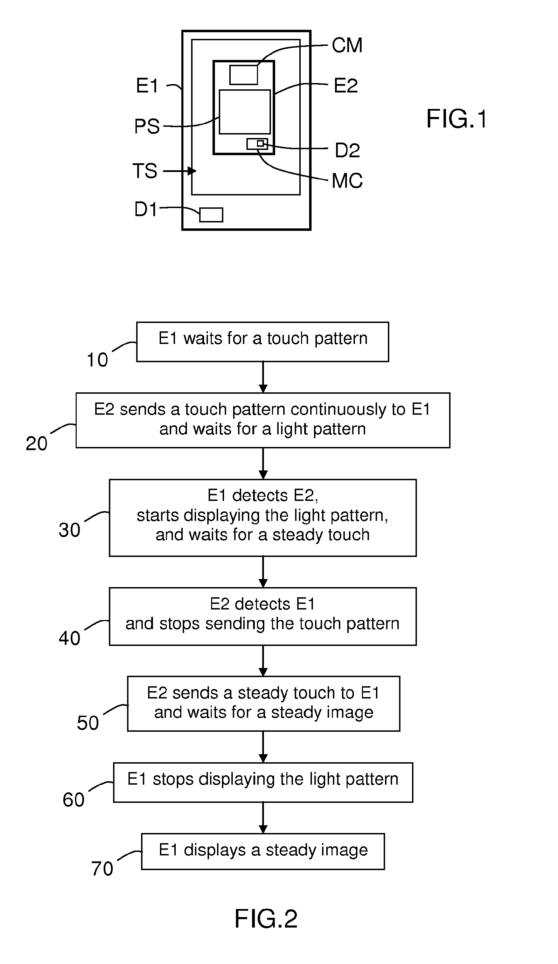

First E1 and second E2 electronic devices are illustrated in the non-limiting example of embodiment of figure 1. The first electronic device E1 (here a smartphone) comprises a touch screen TS with capacitive capabilities that allow triggering events with a finger of a user or with a second electronic device E2. The second electronic device E2 comprises a capacitive module CM, arranged for triggering events into the first electronic device E1 (through its touch screen TS), a photo-sensor PS, arranged for reading information and images displayed onto the touch screen TS, and at least one micro-controller MC, arranged for storing and running communication protocol module including the driving of the communication protocol through the touch screen TS via the photo-sensor PS and the capacitive module CM.

As mentioned above, the invention proposes to implement a method into the first E1 and second E2 electronic devices to allow them starting a bi-directional capacitive and light communication therebetween.

This method comprises a step during which:
- the second electronic device E2 sends a chosen touch pattern continuously with its capacitive module CM,
- the first electronic device E1 displays a chosen light pattern continuously with its touch screen TS and detects the second electronic device E2 when it receives the chosen touch pattern with its touch screen TS,
- the second electronic device E2 detects the first electronic device E1 when it detects the chosen light pattern with its photo-sensor PS, and then sends a chosen steady touch with its capacitive module CM, and
- the first electronic device E1 displays at least one chosen steady image with its touch screen TS when it receives the chosen steady touch with its touch screen TS.

So, when the first electronic device E1 has received the chosen steady touch and when the second electronic device E2 has received the chosen steady image, they are both ready to start a bi-directional capacitive and light communication therebetween, without any action from their user.

This method may be implemented by means of a first communication protocol module D1 located into the first electronic device E1 and a second communication protocol module D2 located into the second electronic device E2.

For instance and as illustrated in the non-limiting example of figure 1, the first communication protocol module D1 may be an application or a part of an application that is stored into a memory of the first electronic device and can be run by the processing means of the first electronic device E1, and the second communication protocol module D2 may be stored into and can be run by the micro-controller MC of the second electronic device E2. But the first communication protocol module D1 could be also a small appliance installed into the first electronic device E1, and/or the second communication protocol module D2 could be also a small appliance installed into the second electronic device E2 and coupled to its micro-controller MC.

So, a first communication protocol module D1 may be made of software modules (and in this case it constitutes a computer program product comprising a set of instructions arranged for performing a part of the method when it is executed by processing means of a first electronic device E1), or of a combination of electronic circuit(s) (or hardware module(s)) and software modules.

In the same way, a second communication protocol module D2 may be made of software modules (and in this case it constitutes a computer program product comprising a set of instructions arranged for performing a part of the method when it is executed by processing means of a second electronic device E2), or of a combination of electronic circuit(s) (or hardware module(s)) and software modules.

The first communication protocol module D1 is arranged for detecting the second electronic device E2 when the first electronic device E1 receives at least one chosen touch pattern from the second electronic device E2, then for triggering a continuous display of a chosen light pattern by the touch screen TS, and for triggering a display of a chosen steady image by this touch screen TS and authorizing its first electronic device E1 to start a bi-directional capacitive and light communication with the second electronic device E2 when its first electronic device E1 receives a chosen steady touch from the second electronic device E2.

The second communication protocol module D2 is arranged for triggering a continuous sending of a chosen touch pattern by the capacitive module CM of the second electronic device E2, for detecting the first electronic device E1 when the photo-sensor PS of the second electronic device E2 detects a chosen light pattern displayed on the touch screen TS, then for triggering sending of a chosen steady touch by the capacitive module CM of its second electronic device E2, and for authorizing its second electronic device E2 to start a bi-directional capacitive and light communication with the first electronic device E1 when the photo-sensor PS of its second electronic device E2 detects a chosen steady touch displayed on the touch screen TS.

The second electronic device E2 (and notably the second communication protocol module D2) may consider that the first electronic device E1 is detected when it has detected the chosen light pattern at least once with the photo-sensor PS. For improving reliability, it could be preferred to detect the pattern at least N times, with N greater or equal to two, for example N being equal to three.

In the same way, the first electronic device E1 (and notably its first communication protocol module D1) may consider that the second electronic device E2 is detected when it has detected the chosen touch pattern at least once with the touch screen TS. For improving reliability, it could be preferred to detect the pattern at least M times, with M greater or equal to two, for example M being equal to three.

For instance, the touch pattern may be a periodical signal produced by the capacitive module CM and simulating an alternation of touch and touch release with a predefined frequency, or a signal simulating a touch that is maintained continuously during a predefined duration. Many other touch patterns can be used including several touches during different times. The touch pattern must be sufficiently distinctive for preventing false detection generated by the background noise. The repetition of the pattern made M times may help to prevent some the false detection.

Also for instance, the steady touch may be a signal produced by the capacitive module CM and simulating a touch that is maintained continuously during a predefined duration.

It is important to note that the touch pattern and the steady touch must be known by the first electronic device E1 (and more precisely by its first communication protocol module D1) before it is coupled to the second electronic device E2. To this effect, it may be fed with a definition of the touch pattern during a programming step, or may comprise a definition of the touch pattern by conception.

Also for instance, the light pattern may be a predefined series of different images (corresponding to one or more gray levels) that are successively displayed during a predefined duration by the touch screen TS. The light pattern must be sufficiently different from what can be generated by the background noise.

Also for instance, the steady image may be an image that is displayed during a predefined duration and/or with a predefined frequency by the touch screen TS.

It is important to note that the light pattern and the steady image must be known by the second electronic device E2 (and more precisely by its second communication protocol module D2) before it is coupled to the first electronic device E1. To this effect, it may be fed with a definition of the touch pattern during a programming step, or may comprise a definition of the touch pattern by conception.

For instance, during the method step the second electronic device E2 may send the chosen touch pattern continuously with its capacitive module CM while in the same time the first electronic device E1 displays the chosen light pattern continuously with its touch screen TS. But it is actually preferred to proceed in a different manner, described hereafter.

Indeed the method step may comprise a first sub-step (i) during which the second electronic device E2 first starts sending the chosen touch pattern continuously with its capacitive module CM, and a second sub-step (ii) during which the first electronic device E1 first detects the second electronic device E2 upon reception of the chosen touch pattern with its touch screen TS, and then starts displaying the chosen light pattern continuously with its touch screen TS. In other words, the first electronic device E1 only starts to display the chosen light pattern continuously if it comes just to receive the chosen touch pattern for preventing the screen to flash in front of user eyes.

Also preferably, the method step may comprise a third sub-step (iii) during which the second electronic device E2 detects the first electronic device E1 after having detected the chosen light pattern with its photo-sensor PS, then stops sending the chosen touch pattern, and finally sends the chosen steady touch with its capacitive module CM, and a fourth sub-step (iv) during which the first electronic device E1 stops displaying the chosen light pattern just after having received the chosen steady touch with its touch screen TS, and then displays the chosen steady image with its touch screen TS.

An example of algorithm comprising sub-steps implementing an example of embodiment of the method according to the invention is described hereafter with reference to figure 2.

In this non-limiting example, the algorithm comprises a sub-step 10 during which the first electronic device D1 waits for a chosen touch pattern. Then in a sub-step 20 the second electronic device E2 starts sending this chosen touch pattern continuously with its capacitive module CM (after having been triggered by the second communication protocol module D2) and then waits for a chosen light pattern. Sub-steps 10 and 20 constitute the above mentioned first sub-step (i).

Then in a sub-step 30 the first electronic device E1 (and more precisely its first communication protocol module D1) considers that it has detected the second electronic device E2 because the touch screen TS has received the chosen touch pattern for example M times. So, it (E1) starts displaying the chosen light pattern continuously with its touch screen TS and waits for a chosen steady touch (after having been triggered by its first communication protocol module D1). This sub-step 30 constitutes the above mentioned second sub-step (ii).

Then in a sub-step 40 the second electronic device E2 (and more precisely its second communication protocol module D2) considers that it has detected the first electronic device E1 because the photo-sensor PS has read the chosen light pattern N times onto the touch screen TS. So, it (E2) stops sending the chosen touch (after having been triggered by its second communication protocol module D2).

Then in a sub-step 50 the second electronic device E2 sends the chosen steady touch with its capacitive module CM and waits for a chosen steady image (after having been triggered by its second communication protocol module D2).

Sub-steps 40 and 50 constitute the above mentioned third sub-step (iii).

Then in a sub-step 60 the first electronic device E1 stops displaying the chosen light pattern after having received the chosen steady touch with its touch screen TS (on request of its first communication protocol module D1).

Finally in a sub-step 70 the first electronic device E1 displays the chosen steady image with its touch screen TS (on request of its first communication protocol module D1). So, the first communication protocol module D1 authorizes its first electronic device E1 to start a bi-directional capacitive and light communication with the second electronic device E2 because it is now sure that they are in a reliable physical contact and want to exchange data. In the same way, once the photo-sensor PS of the second electronic device E2 has read the chosen steady image, it is authorized to start a bi-directional capacitive and light communication with the first electronic device E1 by its second communication protocol module D2 because the latter (D2) is now sure that they are in a reliable physical contact and want to exchange data.

Sub-steps 60 and 70 constitute the above mentioned fourth sub-step (iv).

The invention defines a robust and simple method (and associated communication protocol modules) allowing to start reliably a bi-directional capacitive and light communication between first and second electronic devices, without any action of the user.

The invention is not limited to the embodiments of method and first and second electronic devices described above, only as examples, but it encompasses all alternative embodiments which may be considered by one skilled in the art within the scope of the claims hereafter.

## Claims

1. Method for allowing a first electronic device (E1) with a touch screen (TS) to start a bi-directional capacitive and light communication with a second electronic device (E2) with a capacitive module (CM) and a photo-sensor (PS), **characterized in that** it comprises a step during which said second electronic device (E2) sends a chosen touch pattern continuously with its capacitive module (CM), said first electronic device (E1) displays a chosen light pattern continuously with said touch screen (TS) and detects said second electronic device (E2) upon reception of said chosen touch pattern with its touch screen (TS), said second electronic device (E2) detects said first electronic device (E1) upon detection of said chosen light pattern with its photo-sensor (PS), then sends a chosen steady touch with its capacitive module (CM), and said first electronic device (E1) displays at least one chosen steady image with its touch screen (TS) upon reception of said chosen steady touch with said touch screen (TS).

2. Method according to claim 1, wherein said step comprises a first sub-step (i) during which said second electronic device (E2) first starts sending said chosen touch pattern continuously with its capacitive module (CM), and a second sub-step (ii) during which said first electronic device (E1) detects said second electronic device (E2) upon reception of said chosen touch pattern with its touch screen (TS), then starts displaying said chosen light pattern continuously with said touch screen (TS).

3. Method according to one of claims 1 and 2, wherein said step comprises a third sub-step (iii) during which said second electronic device (E2) detects said first electronic device (E1) upon detection of said chosen light pattern with its photo-sensor (PS), then stops sending said chosen touch pattern, and then sends said chosen steady touch with its capacitive module (CM), and a fourth sub-step (iv) during which said first electronic device (E1) stops displaying said chosen light pattern upon reception of said chosen steady touch with its touch screen (TS), and then displays said chosen steady image with said touch screen (TS).

4. Method according to one of claims 1 to 3, wherein said second electronic device (E2) detects said first electronic device (E1) after having detected said chosen light pattern at least N times with its photo-sensor (PS), with N greater or equal to two.

5. Method according to one of claims 1 to 4, wherein said first electronic device (E1) detects said second electronic device (E2) after having received said chosen touch pattern at least M times with its touch screen (TS), with M greater or equal to two.

6. Touch screen device (E1) having a touch screen (TS), **characterized in that** it comprise a communication protocol module (D1) arranged for detecting a communication device (E2) when said touch screen device (E1) receives at least one chosen touch pattern on the touch screen (TS), then for triggering a continuous display of a chosen light pattern by said touch screen (TS), and for triggering a display of a chosen steady image by said touch screen (TS) and authorizing said touch screen device (E1) to start a bi-directional capacitive and light communication with said communication device (E2) when said touch screen device (E1) receives a chosen steady touch from said communication device (E2).

7. Touch screen device (E1) according to claim 6, wherein the communication protocol module (D1) is arranged for detecting said communication device (E2) when said touch screen device (E1) receives said chosen touch pattern at least M times with its touch screen (TS), with M greater or equal to two.

8. Communication device (E2) having a capacitive module (CM) and a photo-sensor (PS), **characterized in that** it comprises a communication protocol module (D2) arranged for triggering a continuous sending of a chosen touch pattern by said capacitive module (CM) of the communication device (E2), for detecting electronic touch screen device (E1) when said photo-sensor (PS) detects a chosen light pattern displayed on the touch screen (TS) of the touch screen device (E1), then for triggering sending of a chosen steady touch by said capacitive module (CM) for emulating touch on said touch screen (TS), and for authorizing said communication device (E2) to start a bi-directional capacitive and light communication with said touch screen device (E1) when said photo-sensor (PS) of the communication device (E2) detects a chosen steady touch displayed on said touch screen (TS).

9. Communication device according to claim 8, wherein the communication protocol module is arranged for detecting the touch screen device (E1) when said photo-sensor (PS) of the communication device (E2) has detected said chosen light pattern at least N times, with N greater or equal to two.
